# EUROPEAN PATENT APPLICATION

(11) **EP 4 635 728 A1**
(43) Date of publication of application: **22.10.2025**
(21) Application number: 25171748.4
(22) Date of filing: 22.04.2025
(51) Int. Cl.: B32B 3/12, B32B 5/18, B32B 5/22, B32B 5/02, B32B 27/08, E04B 1/80, B32B 5/20

(54) **HONEYCOMB STRUCTURE FOR AEROGEL BASED INSULATION**

(30) Priority: 19.04.2024 US 202463636252 P; 18.04.2025 US 202519183253
(71) Applicant: Carlisle Construction Materials, LLC, Carlisle PA 17013 (US)
(72) Inventor: RAMACHANDRA, Sunil, Lancaster, 17601 (US); MOUNTAIN, Gregory, Newville, 17241 (US); GELFER, Mikhail, Mechanicsburg, 17050 (US)
(74) Representative: Mewburn Ellis LLP

(57) **Abstract**

An insulation product made from a panel having honeycomb-shaped cells filled with aerogel material. The aerogel material may be either a powder that is deposited into the cells after the aerogel has been formed or the aerogel may be formed in situ within the cells by a sol-gel process that optionally uses TEOS as a reaction precursor followed by ambient drying.

## Description

### CROSS-REFERENCE TO RELATED APPLICATION

The present application is related to U.S. Provisional Patent Application No. 63/636,252, of same title, filed April 19, 2024, the entire disclosure of which is incorporated herein by reference in its entirety for all purposes.

### Technical Field:

The present invention relates to aerogel insulation materials.

### Background Of The Invention:

Current polyiso rigid foam insulation materials used in building roofs typically have an R value of 5.7 per inch. As a result, building owners need to purchase 4 inches or more of thickness of these materials to achieve an R-20 value as required by U.S. building codes.

Aerogel materials are ultralight materials derived from gels in which the liquid in the gel has been replaced by a gas under conditions that did not collapse the gel structure when the liquid is removed. Aerogels are the most porous solids in existence. Typically, aerogels are produced either by supercritical-drying or freeze-drying of the gel material to remove the liquid. Supercritical drying can be an expensive process. As a result, the sol-gel process has been used to produce aerogels in situ without supercritical-drying. Instead, ambient drying conditions can be used to make aerogels in situ. Typically, the key to making in situ aerogels with the sol-gel process work effectively has been to select optional precursors. One excellent precursor is Tetraethoxysilane (TEOS).

The most common aerogels are silica aerogels. However, aerogels have been made of many different materials including organic/carbon materials or metal oxide structures. Aerogels are excellent thermal insulators since they have very limited amounts of thermally conducting solid portions and provide very little gas movement for convection heat transfer.

Aerogel based insulation holds the promise of an R value of 9 per inch. As a result, a thinner layer of aerogel-based insulation can be used as compared to rigid polyiso foam insulation to achieve the same insulation effect. Thinner insulation layers are always desired as they have reduced installation costs. Such reduced costs occur due in part to reduced adhesive and mechanical fastening costs.

Unfortunately, aerogel insulation has weak mechanical properties. For example, although standard polyiso insulation has a compressive strength of 20 to 25psi, aerogel insulation may have a compressive strength of less than 10psi. As a result, aerogel insulation is fragile and can easily be damaged or destroyed in usage. Moreover, since very small particles of the aerogel can easily be broken off, aerogels can represent a breathing hazard if not handled correctly. What is instead desired is an aerogel insulation system for a roof or building wall that is thin yet is also strong and not easily damaged.

### Summary Of The Invention:

The present invention provides an insulation product, comprising:
a panel having individual cells arranged in a honeycomb structure; and aerogel material within the individual cells of the honeycomb structure. A top membrane covers the top of the honeycomb structure, and a bottom membrane covers the bottom of the honeycomb structure.

The panel and the top and bottom membranes may optionally be made of polypropylene, PET, polycarbonate, polyethylene, polyurethane, PVC, aramids, or mixtures thereof. The panel may also include paperboard, cardboard or other cellulose based materials. It may also include a fire retardant.

The aerogel material itself may be a silica aerogel, a polyimide-based aerogel film, a carbon aerogel, a polyurethane aerogel, a cellulose based aerogel, or mixtures thereof. Silicon aerogels are preferred because they can be prepared such that the silica solidifies into three-dimensional, intertwined clusters that make up only 3% of the total volume with the remaining 97% of the volume being composed of air in extremely small nanopores. Silicon aerogels may be made by different processes, and the present system is not limited to any particular method of preparation.

In a first preferred method, the aerogel material is formed prior to be being deposited as a powder into the individual cells in the honeycomb structure in the panel. In a second preferred method, the aerogel material is formed in situ within the individual cells of the honeycomb structure. In one exemplary aspect, the aerogel material may be formed in situ through a sol-gel process, especially a sol-gel process that uses TEOS as a reaction precursor.

In optional preferred aspects, the panel having the honeycomb structure of cells is formed from a specially shaped polymer film that is accordion-folded resulting in a structure in which half of the individual cells have an open top end and half of the individual cells have an open bottom end. When using this approach, half of the individual cells may be filled from the top, and then a top membrane placed thereover. Next, the panel can be flipped over and the other (bottom) half of the cells can be filled, and a membrane placed thereover. Filling of the individual cells in the honeycomb structure with the aerogel material can optionally be accomplished by pouring the powdered aerogel material into open top ends of the individual cells of the honeycomb structure in the panel and then using a blade to wipe away excess powdered aerogel material sticking out of the open top ends of the individual cells of the honeycomb structure. In alternate aspects, half of the cells can be filled with the aerogel material and the other half can be filled with air or other suitable gas, as desired.

In alternative approaches, the aerogel material can be formed in situ within the individual cells by a sol-gel process. Optionally, this sol-gel process can use TEOS as a reaction precursor and ambient drying. Optionally as well, the aerogel material can be formed onto a non-woven PET fibrous matrix that has been pre-deposited into the individual cells of the honeycomb structure.

Preferably, the aerogel material is in powdered form and may be a silica aerogel. Alternatively, the aerogel may be a polyimide-based aerogel film, or a carbon aerogel, or a polyurethane aerogel, or a cellulose based aerogel. In addition, the present aerogel may be a hybrid aerogel which combines different types of aerogel materials like nanoparticles, polymers, or metals to create composites having enhanced properties. This powdered aerogel may be incorporated into a non-woven PET fibrous matrix, and/or held together with a low density/lightweight binder.

As stated above, a top membrane or facer covers the top of the honeycomb structure, and a bottom membrane or facer covers the bottom of the honeycomb structure in the panel. The top and bottom facers may be attached to the honeycomb panel by adhesives or be laminated under heat and pressure to the panel. The membranes/facers may also be made from PET or polypropylene, polycarbonate, polyethylene, polyurethane, PVC, or various aramids. The facers may also include paperboard, cardboard or other cellulose based materials, and they may optionally comprise a non-woven fleece layer.

In optional preferred embodiments, two or more of the present aerogel-filled honeycomb panels may be stacked together to provide further insulation. An air (or gas) gap may optionally be provided between such aerogel-filled honeycomb panels.

### Brief Description Of The Drawings:

Fig. 1 is a perspective view of a honeycomb panel with top and bottom facer membranes attached by adhesive layers.
Fig. 2 is a perspective view of an optional existing system for folding a polymer film panel to produce the present honeycomb structure.
Fig. 3A is a perspective view of a powder application device system for filling the honeycomb structure with aerogel materials.
Fig. 3B is a sectional side elevation view corresponding to Fig. 3A.
Fig. 3C is a sectional side elevation view similar to Fig. 3A, after half of the honeycomb cells have been filled with aerogel, showing a top member closing the open top ends of the honeycomb cells.
Fig. 3D is a sectional side elevation view similar to Fig. 3B, but after the honeycomb panel has been turned upside down, showing the filling of the other half of the honeycomb cells.
Fig. 4 is a sectional side elevation view of two of the present aerogel-filled honeycomb panels being stacked one on top of the other, but separated by an air gap.

### Detailed Description Of The Drawings:

The present invention provides an insulation product, comprising:
a panel having individual cells in a honeycomb structure; and aerogel material within the individual cells of the honeycomb structure. Preferably, the panel is a polymer-based panel that is made of polypropylene, PET, polycarbonate, polyethylene, polyurethane, PVC, or various aramids. The panel may also include paperboard, cardboard or other cellulose based materials. The panel material may also include a fire retardant. It is to be understood, however, that the present invention is not limited to these materials.

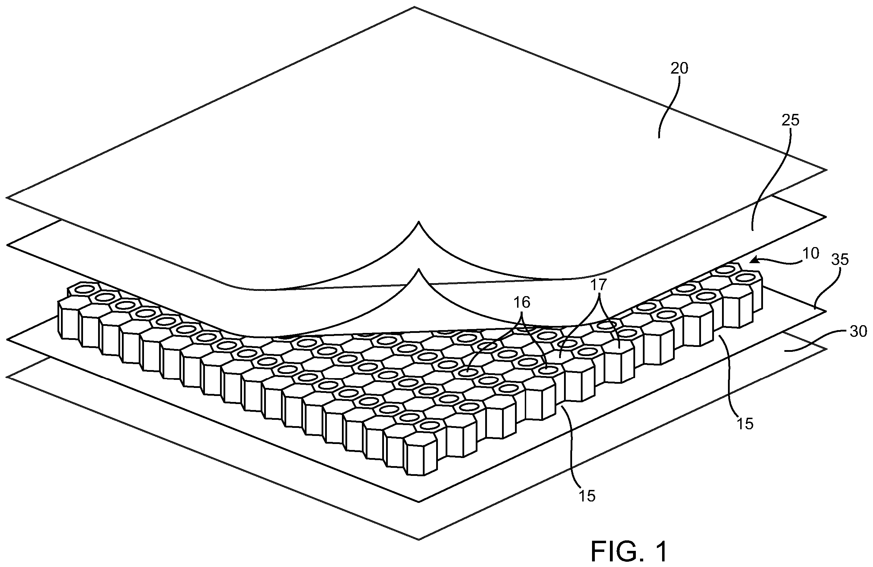

Fig. 1 is a perspective view of a honeycomb panel 10 with top and bottom facer membranes 20 and 30 attached by adhesive layers 25 and 35 respectively. In accordance with the present invention, the individual cells 15 in the honeycomb structure 10 are filled with aerogel material. In some aspects of the present system, the aerogel material is simply deposited as a powder into the cells 15 of the honeycomb structure 10. In other aspects of the present system, the aerogel material is formed in situ in cells 15 of the honeycomb structure 10. The aerogel material may be a silica aerogel, a polyimide-based aerogel film, a carbon aerogel, a polyurethane aerogel, a cellulose based aerogel, or mixtures thereof.

The present honeycomb structure is ideal because it has a high stiffness to weight ratio due to the hollow cells and the geometry of the structure. The compressive strength of the honeycomb panel is a function of the cell wall properties, cell wall thickness and cell geometry. For example, a typical compressive strength value for a recycled PET honeycomb panel made by Econocore of Leuven, Belgium with a 10mm core thickness, 5mm cell diameter and 80 kg/m3 cell wall density is 116psi. However, these panels can be engineered to have compressive strengths over 900psi. In short, the honeycomb structure provides the advantages of low weight, high stiffness and high compressive strength.

Membrane 20 covers the open top ends of individual cells 15 and membrane 30 covers the open bottom ends of individual cells 15. Membranes 20 and 30 may optionally be adhered or laminated onto panel 10. In preferred aspects, honeycomb panel 10 and membranes 20 and 30 may be made of polypropylene, PET, polycarbonate, polyethylene, polyurethane, PVC, aramids, or mixtures thereof.

When the aerogel is formed in situ in cells 15 it may be formed by a sol-gel process. In a sol-gel process, solvent is added to a precursor, a catalyst is added, the gel is aged and then the solvent is extracted. An advantage of the sol-gel process is that it may be done under ambient drying conditions, making it much cheaper than supercritical-drying. Optionally, the sol-gel process uses TEOS as a reaction precursor followed by ambient drying.

The present system also provides a method of manufacturing an insulation product, comprising: providing a panel 10 having individual cells 15 arranged in a honeycomb structure; and filling the individual cells 15 with an aerogel material or forming an aerogel material in the individual cells of the honeycomb structure.

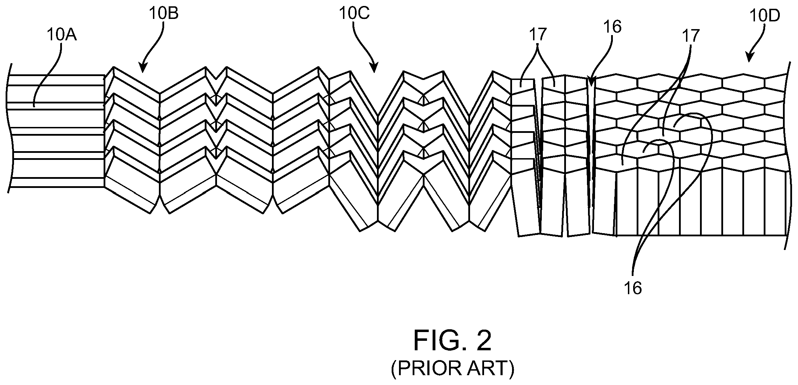

Referring next to Fig. 2, panel 10 may be formed by a process described in U.S. Patent 8,795,806, entitled Half closed thermoplastic honeycomb, their production process and equipment to produce, owned by K.U. Leuven Research & Development (Germany) and Published Patent Application 2021/0268763, entitled Folded Core Structure And Process For Providing A Folding Core Structure, assigned to Low and Bonar Germany, both of which are incorporated herein by reference in their entireties. This same process is used by Econocore of Leuven, Belgium to make honeycomb shaped polymer panels.

In this process, panel 10 is formed by accordion folding a formed polymer sheet. Fig. 2 illustrates this process from left to right. On the left, sheet 10A is generally planar. Next, at step 10B, the sheet is folded to provide raised and lowered portions as shown. Next, at step 10C, these portions are folded together such that they eventually abut one another at 10D. As can be seen, this manner of accordion folding will result in half of cells 15 having open top ends 16 and half of cells 15 having closed top ends 17. The bottom of panel 10 will basically be a mirror image of the top with half of the bottom cells being open and half of the bottom cells being closed.

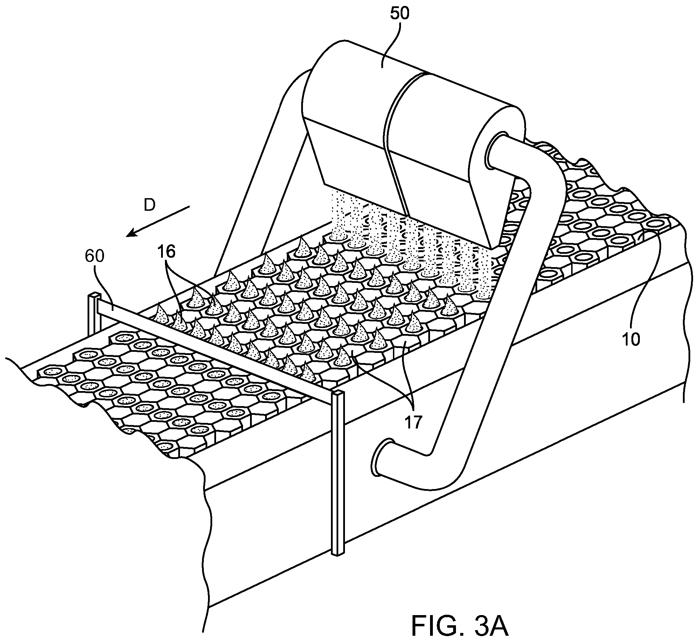

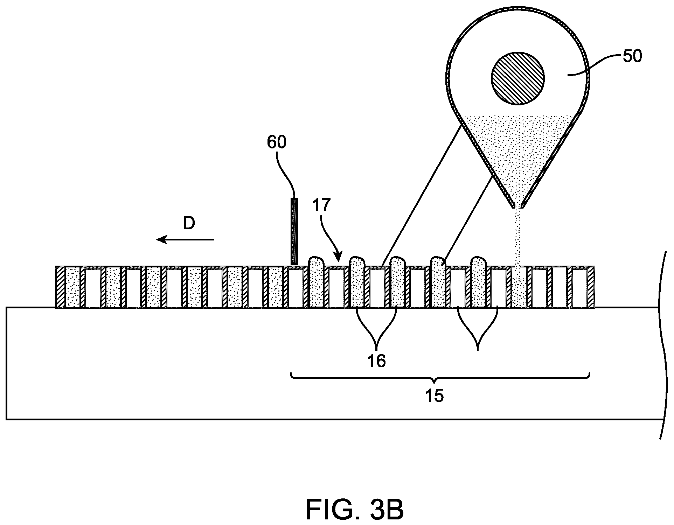

In preferred aspects, as seen in Figs. 3A and 3B, the aerogel is a powder and is filled into open top ends 16 of individual cells 15 by a powder applicator 50 dropping aerogel powder into the open top ends 16 of the panel 10 passing therebelow as the panel moves in direction D. As can be seen, excess aerogel powder may overfill some of open top ends 16 of cells 15. Accordingly, a blade 60 can be positioned just above these open top ends 16 to remove excess powder.

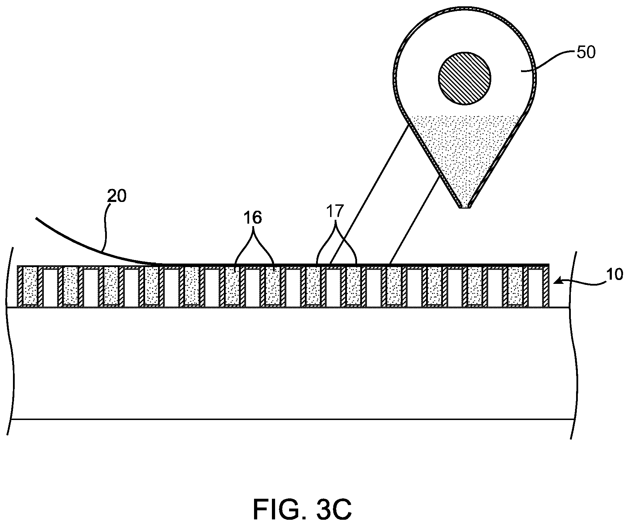

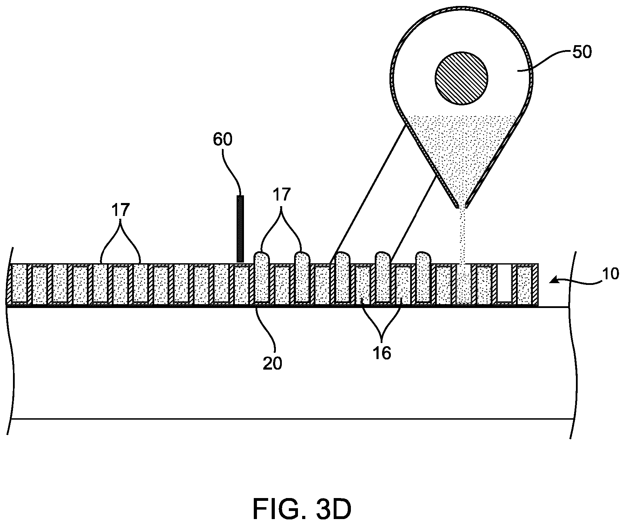

Next, as seen in Fig. 3C, After the entire panel has been passed under blade 60, top membrane 20 may be applied to cover and close these open top ends 16. Next as seen in Fig. 3D, the panel 10 itself can be flipped upside down and the process is repeated, thus filling the open cells that were previously on the bottom the panel. In optional methods, however, only the cells on the top having open top ends are filled with aerogel and the top and bottom membranes are attached. The result is a panel in which half the cells 15 are filled with aerogel and half are filled with air. An insulation panel formed in this way would still provide some of the benefits of a fully filled aerogel filled panel, but at half the cost. An exemplary powder application machine 50 suitable for this process is made by Zimmer GmbH of Klagenfurt, Austria. Another exemplary powder application machine suitable for this process is made by Weiss Machines ApS of Vejle Denmark.

It is to be understood that the present system covers any form of honeycomb shaped panel structure 10 and is not limited only to structures formed through accordion-folding a panel. For example, honeycomb structures in which all of the top ends are open for filling with aerogel right at the start are also encompassed within the scope of the present system. When using such preformed honeycomb panels, all of the cells 15 may be simultaneously filled by passing panel 10 underneath powder applicator 50 and blade 60. The powder applicator 50 would simply pour the powdered aerogel material into all of the open top ends of the all of the individual cells of 15. Then, blade 60 could be used to wipe away excess powdered aerogel material protruding out of the open top ends 16 of the individual cells 15.

The powdered aerogel material may be formed prior to being poured into the individual cells of the honeycomb structure in the panel, for example by being formed in situ in the individual cells by a sol-gel process. Optionally, the sol-gel process uses TEOS as a reaction precursor followed by ambient drying. Optionally as well, the aerogel material may be formed onto a non-woven PET fibrous matrix that has been pre-deposited into the individual cells 15 of the honeycomb structure 10.

In preferred embodiments, at least one of the top and bottom membranes 20 and 30 comprise a non-woven fleece layer. The aerogel material may optionally be held together with an added low density/lightweight binder.

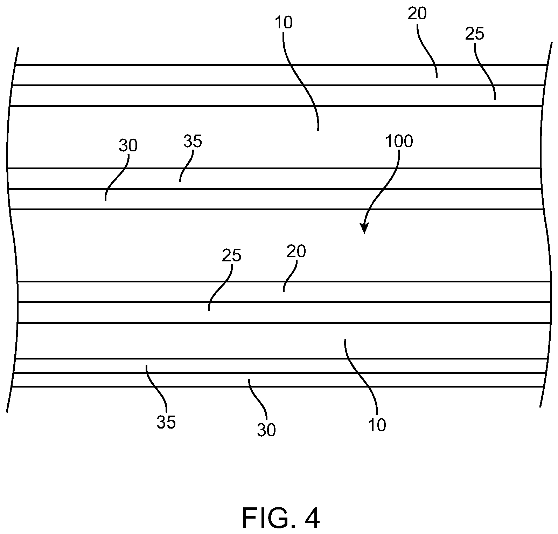

Lastly, as seen in Fig. 4, two (or more) of the present aerogel-filled honeycomb panels 10 can be stacked one on top of the other. In Fig. 4, the panels 10 are separated by an optional air gap 100. By stacking panels 10, and by optionally separating the panels 10 with one or more air gaps 100, the insulation properties of the present system can be increased. In addition, the gap 100 may be filled with preferred gasses other than air, as desired, to further increase insulation efficiency.
The following numbered clauses set out broad combinations of the inventive concepts herein disclosed:
1. An insulation product, comprising:
   a panel having individual cells arranged in a honeycomb structure; and
   aerogel material within the individual cells of the honeycomb structure.
2. The insulation product of clause 1, further comprising:
   a top membrane covering the top of the honeycomb structure in the panel; and
   a bottom membrane covering the bottom of the honeycomb structure in the panel.
3. The insulation product of clause 2, wherein the top and bottom membranes are adhered or laminated onto the top and bottom of the panel respectively.
4. The insulation product of clause 2, wherein the panel and the top and bottom membranes are made of polypropylene, PET, polycarbonate, polyethylene, polyurethane, PVC, aramids, or mixtures thereof.
5. The insulation product of clause 2, wherein the aerogel material is:
   a silica aerogel, a polyimide-based aerogel film, a carbon aerogel, a polyurethane aerogel, a cellulose based aerogel, or mixtures thereof.
6. The insulation product of clause 2, wherein the aerogel material is formed prior to be being deposited into the individual cells in the honeycomb structure in the panel.
7. The insulation product of clause 6, wherein the aerogel material is a powdered aerogel that is deposited into the individual cells of the honeycomb structure in the panel.
8. The insulation product of clause 2, wherein the aerogel material is formed in situ within the individual cells of the honeycomb structure in the panel.
9. The insulation product of clause 8, wherein the aerogel material is formed in situ through a sol-gel process.
10. The insulation product of clause 9, wherein the sol-gel process uses TEOS as a reaction precursor followed by ambient drying.
11. A method of manufacturing an insulation product, comprising:
   providing a panel having individual cells arranged in a honeycomb structure; and
   filling the individual cells of the honeycomb structure with an aerogel material or
   forming an aerogel material in the individual cells of the honeycomb structure.
12. The method of clause 11, wherein providing a panel having individual cells arranged in a honeycomb structure comprises:
   accordion folding a shaped film to form the honeycomb structure in the panel.
13. The method of clause 12, wherein the accordion folding results in half of the individual cells having an open top end and half of the individual cells having an open bottom end.
14. The method of clause 11, wherein filling the individual cells of the honeycomb structure with an aerogel material comprises:
   pouring the powdered aerogel material into open top ends of the individual cells of the honeycomb structure in the panel and then using a blade to wipe away excess powdered aerogel material protruding out of the open top ends of the individual cells of the honeycomb structure.
15. The method of clause 14, wherein the powdered aerogel material was formed prior to being poured into the individual cells of the honeycomb structure in the panel.
16. The method of clause 11, wherein forming an aerogel material in the individual cells comprises:
   forming the aerogel material in situ in the individual cells by a sol-gel process.
17. The method of clause 16, wherein the sol-gel process uses TEOS as a reaction precursor followed by ambient drying.
18. The method of clause 16, wherein the aerogel material is formed onto a non-woven PET fibrous matrix that has been deposited into the individual cells of the honeycomb structure.
19. The method of clause 11, further comprising:
   covering the top of the panel with a top membrane; and
   covering the bottom of the panel with a bottom membrane.
20. The method of clause 19, wherein at least one of the top and bottom membranes comprise a non-woven fleece layer.
21. The method of clause 11, wherein some of the individual cells of the honeycomb structure are filled with the aerogel material and some of the individual cells of the honeycomb structure are filled with air.
22. The method of clause 11, further comprising: stacking two or more of the panels together separated by a gas gap.

## Claims

1. An insulation product, comprising:
a panel having individual cells arranged in a honeycomb structure; and
aerogel material within the individual cells of the honeycomb structure.

2. The insulation product of claim 1, further comprising:
a top membrane covering the top of the honeycomb structure in the panel; and
a bottom membrane covering the bottom of the honeycomb structure in the panel.

3. The insulation product of claim 2, wherein the top and bottom membranes are adhered or laminated onto the top and bottom of the panel respectively.

4. The insulation product of claim 2, wherein the panel and the top and bottom membranes are made of polypropylene, PET, polycarbonate, polyethylene, polyurethane, PVC, aramids, or mixtures thereof.

5. The insulation product of claim 2, wherein the aerogel material is:
a silica aerogel, a polyimide-based aerogel film, a carbon aerogel, a polyurethane aerogel, a cellulose based aerogel, or mixtures thereof.

6. The insulation product of claim 2, wherein the aerogel material is formed prior to be being deposited into the individual cells in the honeycomb structure in the panel, and optionally wherein the aerogel material is a powdered aerogel that is deposited into the individual cells of the honeycomb structure in the panel.

7. The insulation product of claim 2, wherein the aerogel material is formed in situ within the individual cells of the honeycomb structure in the panel, and optionally wherein the aerogel material is formed in situ through a sol-gel process, and optionally wherein the sol-gel process uses TEOS as a reaction precursor followed by ambient drying.

8. A method of manufacturing an insulation product, comprising:
providing a panel having individual cells arranged in a honeycomb structure; and
filling the individual cells of the honeycomb structure with an aerogel material or
forming an aerogel material in the individual cells of the honeycomb structure.

9. The method of claim 8, wherein providing a panel having individual cells arranged in a honeycomb structure comprises:
accordion folding a shaped film to form the honeycomb structure in the panel, wherein optionally the accordion folding results in half of the individual cells having an open top end and half of the individual cells having an open bottom end.

10. The method of claim 8, wherein filling the individual cells of the honeycomb structure with an aerogel material comprises:
pouring the powdered aerogel material into open top ends of the individual cells of the honeycomb structure in the panel and then using a blade to wipe away excess powdered aerogel material protruding out of the open top ends of the individual cells of the honeycomb structure, wherein optionally the powdered aerogel material was formed prior to being poured into the individual cells of the honeycomb structure in the panel.

11. The method of claim 8, wherein forming an aerogel material in the individual cells comprises:
forming the aerogel material in situ in the individual cells by a sol-gel process, wherein optionally the sol-gel process uses TEOS as a reaction precursor followed by ambient drying.

12. The method of claim 11, wherein the aerogel material is formed onto a non-woven PET fibrous matrix that has been deposited into the individual cells of the honeycomb structure.

13. The method of claim 8, further comprising:
covering the top of the panel with a top membrane; and
covering the bottom of the panel with a bottom membrane
and wherein optionally at least one of the top and bottom membranes comprise a non-woven fleece layer.

14. The method of claim 8, wherein some of the individual cells of the honeycomb structure are filled with the aerogel material and some of the individual cells of the honeycomb structure are filled with air.

15. The method of claim 8, further comprising: stacking two or more of the panels together separated by a gas gap.
